# EUROPÄISCHE PATENTSCHRIFT

(11) **EP 1 723 513 B1**
(45) Veröffentlichungstag und Bekanntmachung des Hinweises auf die Patenterteilung: **27.08.2008**
(21) Anmeldenummer: 05701596.8
(22) Anmeldetag: 24.01.2005
(51) Int. Cl.: G06F 9/44

(54) **VERFAHREN ZUR KONFIGURATION EINES COMPUTERPROGRAMMS**
METHOD FOR CONFIGURING A COMPUTER PROGRAM
PROCEDE POUR CONFIGURER UN PROGRAMME INFORMATIQUE

(30) Priorität: 05.02.2004 DE 102004005730
(43) Veröffentlichungstag der Anmeldung: 22.11.2006
(73) Patentinhaber: ROBERT BOSCH GMBH, 70442 Stuttgart (DE)
(72) Erfinder: SCHENK, Rene, 71732 Tamm (DE); BEUTER, Bjoern, 71149 Bondorf (DE); SCHNEIDER, Klaus, 71640 Ludwigsburg (DE); ILLG, Bernd, 75031 Eppingen (DE)
(86) Internationale Anmeldenummer: PCT/EP2005/050289
(87) Internationale Veröffentlichungsnummer: WO 2005/076129

(56) Entgegenhaltungen:
- US-A- 5 872 977
- US-A1- 2002 040 469
- US-A1- 2002 199 170

## Beschreibung

Die Erfindung betrifft ein Verfahren zur Konfiguration eines mindestens eine Funktionseinheit umfassenden Computerprogramms.

Die Erfindung betrifft auch ein Softwaresystem zur Konfiguration eines mindestens eine Funktionseinheit umfassenden Computerprogramms.

### Stand der Technik

Moderne Computerprogramme werden überwiegend so programmiert, dass sie in einem möglichst breiten Anwendungsbereich einsetzbar sind. Der Anwendungsbereich wird einerseits durch die zur Verfügung gestellten Funktionalitäten, die wiederum möglichst viele Benutzerwünsche abdecken sollen, und andererseits durch die zugrunde liegende Hardware, auf der das Computerprogramm ablaufen soll, bestimmt. Die zugrunde liegende Hardware bezeichnet hierbei unterschiedliche Computersysteme, die in unterschiedlichen Bereichen eingesetzt werden, aus unterschiedlichen Komponenten (beispielsweise Prozessoren oder Bussystemen) aufgebaut sind und/oder über unterschiedliche Peripheriegeräte verfügen.

Unterschiedliche Funktionalitäten können sich aus unterschiedlichen Gegebenheiten der zugrunde liegenden Hardware ergeben oder aus unterschiedlichen Benutzerwünschen. Eine Anpassung und damit eine Spezialisierung eines Computerprogramms an eine zugrunde liegende Hardware und an bestimmte Benutzerwünsche umfasst eine sogenannte Konfiguration des Computerprogramms.

Eine Konfiguration umfasst beispielsweise das Aktivieren oder Deaktivieren einzelner Funktionen des Computerprogramms, das Setzen von Startwerten für bestimmte Variablen oder das Vorgeben und Spezifizieren bestimmter Variablentypen.

Es ist bekannt, die in einem Computerprogramm verwendeten Variablen und Funktionen in einer sogenannten Header-Datei zu deklarieren und eine Konfiguration des Computerprogramms durchzuführen, indem einzelne Variablen oder Funktionsbezeichner in der Header-Datei verändert werden. Beispielsweise ist es möglich, einem in dem Computerprogramm verwendeten und in der Header-Datei deklarierten Funktionsbezeichner in Abhängigkeit von einer bestimmten Konfiguration eine spezielle Funktion zuzuweisen.

Üblicherweise werden Computerprogramme in einer sogenannten Hochsprache, beispielsweise C, C++, Scheme oder JAVA, erstellt. Üblicherweise wird ein in einer Hochsprache erstelltes Computerprogramm als Source-Code bezeichnet. Um ein derartiges Computerprogramm auf einem Computer ausführen zu können, muss aus dem Source-Code ein sogenannter Maschinencode erzeugt werden, der Anweisungen enthält, die von dem Prozessor des Computers ausführbar sind. Maschinencode kann durch sogenanntes Interpretieren oder Kompilieren des Source-Codes erzeugt werden.

Typischerweise umfasst ein Computerprogramm eine Vielzahl von Funktionseinheiten. Der Source-Code einer oder mehrerer Funktionseinheiten ist dabei in einer Datei abgespeichert. Einer oder mehrerer derartiger Dateien ist eine Header-Datei zugeordnet. Somit besteht ein Computerprogramm typischerweise aus einer Vielzahl von Dateien. Eine Konfiguration eines derartigen Computerprogramms, die durch Änderungen innerhalb einzelner Header-Dateien durchgeführt wird, ist deshalb sehr unübersichtlich und kann häufig nur von dem Ersteller des Source-Codes durchgeführt werden. Zudem muss eine Dokumentation aller Header-Dateien erstellt. werden, was sehr aufwendig ist, wobei selbst die Dokumentation meist sehr unübersichtlich ist.

Aus der US 5,872,977 ist ein Verfahren zur Verwendung bei der Konfiguration eines Computerprogramms bekannt. Hierbei werden eine plattformunabhängige Konfigurationsdatei und eine plattformabhängige Datei vorgegeben. In der plattformabhängigen Konfigurationsdatei sind konkrete Konfigurationsparameter abgespeichert und in der plattformabhängigen Datei sind plattformabhängige parametrisierte Regeln abgespeichert. Mittels des bekannten Verfahrens werden die konkreten Werte den parametrisierten Regeln in der plattformabhängigen Datei zugewiesen und die so erzeugten Regeln als sogenanntes "Makefile" abgelegt. Dieses Makefile wird dann zur Steuerung der Code-Erzeugung und insbesondere zur Steuerung eines Compilers bei der Code-Erzeugung eingesetzt. Die plattformunabhängige Datei entspricht damit einer bekannten Header-Datei und die platiformabhängige Datei stellt ein parametrisiertes Script dar, aus dem durch Einsetzen der konkreten Werte ein den Kompilierungsprozess steuerndes Script erzeugt wird.

Es ist auch bekannt, zur Konfiguration eines Computerprogramms diesem eine spezielle Funktionseinheit zuzuordnen, mittels der eine Konfiguration des gesamten Computerprogramms
beispielsweise durch Änderung der Werte von vorgegebenen Parametern möglich ist. Die Funktionseinheit kann beispielsweise aus dem ablaufenden Computerprogramm heraus aufgerufen und zur Konfiguration des Computerprogramms ausgeführt werden. Eine derartige für die Konfiguration des Computerprogramms vorgesehene Funktionseinheit erlaubt jedoch nur eine Konfiguration innerhalb vorgegebener Bereichsgrenzen. Eine Konfiguration des Computerprogramms beispielsweise zur Anpassung des Computerprogramms auf eine neue Hardware oder zur Anpassung des Computerprogramms an neue Benutzerwünsche ist mit einer derartigen Funktionseinheit nicht möglich. Ferner muss die zur Konfiguration verwendete Funktionseinheit speziell für das betreffende Computerprogramm entwickelt werden und kann nicht für andere Computerprogramme verwendet werden.

Aufgabe der Erfindung ist es daher, eine Möglichkeit zu schaffen, die eine möglichst übersichtliche und flexible Konfiguration eines Computerprogramms erlaubt.

Die Aufgabe wird durch ein Verfahren der eingangs genannten Art gelöst, das die folgenden Schritte umfasst:
- Erstellen mindestens einer implementierungsunabhängigen Konfigurationsdatei und/oder Änderung von in der mindestens einen implementierungsunabhängigen Konfigurationsdatei abgelegten Informationen;
- automatischer Aufbau und/oder automatische Aktualisierung von in einem Konfigurationsdatencontainer abgelegten Konfigurationsdaten in Abhängigkeit von den in der mindestens einen implementierungsunabhängigen Konfigurationsdatei abgelegten Informationen;
- automatisches Erzeugen mindestens einer implementierungsabhängigen Konfigurationsdatei in Abhängigkeit von den in dem Konfigurationsdatencontainer abgespeicherten Konfigurationsdaten;
- automatische Konfiguration der mindestens einen Funktionseinheit in Abhängigkeit von in der mindestens einen implementierungsabhängigen Konfigurationsdatei abgelegten Informationen.

### Vorteile der Erfindung

Die eine Konfiguration bestimmenden Daten werden also unabhängig von einer beabsichtigten konkreten Implementierung in einer oder mehreren implementierungsunabhängigen Konfigurationsdateien abgelegt. Die Implementierungsunabhängigkeit dieser Konfigurationdatei ermöglicht insbesondere eine abstrakte Beschreibung der abgelegten Informationen. Dies ermöglicht es, die für die Konfiguration des Computerprogramms relevanten Informationen besonders gut lesbar abzulegen und damit die Konfiguration deutlich zu vereinfachen. Dadurch, dass diese Konfigurationdatei implementierungsunabhängig ist, ist es insbesondere möglich, auf einfache Weise eine Konfiguration des Computerprogramms zu realisieren, so dass das Computerprogramm beispielsweise auf einem neuen Computersystem ablauffähig ist, dessen genaue Parameter bei der Erstellung des Computerprogramms noch gar nicht bekannt waren.

Der Konfigurationsdatencontainer ermöglicht es, alle für eine Konfiguration relevanten Daten zentral vorzuhalten. Mittels der in dem Konfigurationdatencontainer abgelegten Konfigurationsdaten wird automatisch mindestens eine implementierungsabhängige Konfigurationsdatei erzeugt. In der implementierungsabhängigen Konfigurationsdatei findet bezüglich der implementierungsunabhängigen Konfigurationsdatei eine Konkretisierung einzelner oder mehrere Parameterwerte statt. Bei einer derartigen Konkretisierung werden beispielsweise relative Werte durch absolute Werte ersetzt. Ebenso können einzelnen Werten oder Datenbereichen bestimmte Datentypen oder -strukturen zugeordnet werden. Die implementierungsabhängige Konfigurationsdatei berücksichtigt folglich implementierungsabhängige Eigenschaften, wie beispielsweise eine oder mehrere bei der Programmierung des Source-Codes verwendeten Programmiersprachen oder Eigenschaften der Hardware, auf der das Computerprogramm ablaufen soll.

Der Aufbau beziehungsweise die Aktualisierung des Konfigurationsdatencontainers mittels der in den implementierungsunabhängigen Konfigurationsdateien abgelegten Informationen kann beispielsweise mittels sogenannter Scripte durchgeführt werden. Dabei bezeichnet ein Script eine Sequenz von Befehlen, die von einem speziellen Computerprogramm ausgeführt werden können. Derartige spezielle Computerprogramme sind beispielsweise AWK oder Perl. Diese speziellen Computerprogramme können auch eingesetzt werden, um aus den in dem Konfigurationsdatencontainer abgelegten Konfigurationsdaten implementierungsabhängige Konfigurationsdateien zu erzeugen.

Ein wesentlicher Bestandteil der Erfindung ist also die Erkenntnis, dass die Konfiguration eines Computerprogramms entscheidend verbessert werden kann, indem zwischen einen Benutzer (Konfigurator) und dem Computerprogramm eine abstrakte Beschreibung der auszuführenden Konfiguration in der implementierungsunabhängigen Konfigurationsdatei vorgesehen ist, die der Konfiguration zugrunde gelegt wird. Anhand der implementierungsunabhängigen Konfigurationsdatei wird automatisch eine implementierungsabhängige Konfigurationsdatei erstellt, die dann zur Konfiguration des Computerprogramms herangezogen wird. Das erfindungsgemäße Verfahren ermöglicht es also, die eine Konfiguration beschreibenden Informationen abstrakt und damit besonders gut lesbar anzugeben. Durch die Unabhängigkeit jeglicher Implementierungsdetails wird ferner eine besonders hohe Flexibilität erreicht.

In einer vorteilhaften Weiterbildung des Verfahrens wird mindestens eine Abhängigkeitsinformation, die eine Abhängigkeit von mindestens zwei in dem Konfigurationsdatencontainer vorliegenden Konfigurationsdaten beschreibt, automatisch erzeugt. Die mindestens eine implementierungsabhängige Konfigurationsdatei wird in Abhängigkeit der mindestens einen Abhängigkeitsinformation erzeugt.

Abhängigkeitsinformationen können beispielsweise beschreiben, ob sich die Änderung eines Konfigurationsparameters auf einen anderen Konfigurationsparameter auswirkt. Wird zum Beispiel für eine Funktionseinheit eine Resource ausschließlich reserviert, so steht sie während der Ausführung der Funktionseinheit anderen Funktionseinheiten nicht zur Verfügung. Mit Abhängigkeitsinformationen kann ermittelt werden, welche Funktionseinheiten eine bestimmte Resource benötigen und damit nicht gleichzeitig ablaufen können. Abhängigkeitsinformationen können folglich auch zur Resourcenverwaltung verwendet werden.

In einer bevorzugten Ausführungsform des Verfahrens werden mehrere implementierungsunabhängige Konfigurationsdateien erstellt und jede der implementierungsunabhängigen Konfigurationsdateien wird mindesten einer Funktionseinheit zugeordnet. Dies ermöglicht eine besonders einfache Konfiguration dadurch, dass die als Informationen in den implementierungsunabhängigen Konfigurationsdateien abgelegten Konfigurationsparameter besonders einfach aufgefunden und verändert werden können. Beispielsweise ist es möglich, die eine Konfiguration bestimmenden Informationen, also die Konfigurationsparameter, nach der von diesen beeinflussten Funktionalität oder Hardware zu ordnen. Ferner wird dadurch eine besonders einfache Anpassung der implementierungsunabhängigen Konfigurationsdateien an neu hinzugekommene Funktionseinheiten ermöglicht. Im einfachsten Fall wird einer neu hinzugekommenen Funktionseinheit eine spezielle implementierungsunabhängige Konfigurationsdatei zugeordnet.

Vorteilhafterweise werden mehrere implementierungsabhängige Konfigurationsdateien erzeugt und es wird jede der implementierungsabhängigen Konfigurationsdatei mindestens einer Funktionseinheit zugeordnet. Eine derartige Strukturierung der implementierungsabhängigen Konfigurationsdateien erhöht die Übersichtlichkeit der erzeugten implementierungsabhängigen Konfigurationsdateien. Ist der Source-Code derartig strukturiert, dass sich eine oder mehrere Funktionseinheiten in unterschiedlichen Dateien befinden, so kann erreicht werden, dass jeder der Dateien des Source-Codes eine implementierungsabhängige Konfigurationsdatei zugeordnet ist. Eine besonders übersichtliche Strukturierung kann auch dadurch erreicht werden, dass jeder implementierungsunabhängigen Konfigurationsdatei je eine implementierungsabhängige Konfigurationsdatei zugeordnet ist.

Vorzugsweise wird die mindestens eine implementierungsabhängige Konfigurationsdatei in Abhängigkeit von mindestens einer Eigenschaft einer Hardware, auf der eine Installation zumindest eines Teils des konfigurierten Computerprogramms ermöglicht werden soll, erzeugt. Eine derartige Hardwareeigenschaft kann beispielsweise die Anzahl von zur Verfügung stehenden Prozessoren oder Art und Anzahl von an die Hardware angeschlossenen Sensoren sein. Werden derartige Hardwareeigenschaften bei der Erzeugung der implementierungsabhängigen Konfigurationsdateien berücksichtigt, so kann eine besonders präzise Konfiguration des Computerprogramms erfolgen. Damit ist es beispielsweise möglich, insbesondere mit Abhängigkeitsinformationen eine hinsichtlich der Ausführungsgeschwindigkeit optimierte Konfiguration automatisch zu erstellen.

In einer bevorzugten Ausführungsform wird die mindestens eine implementierungsabhängige Konfigurationsdatei in Abhängigkeit von dem Ergebnis einer Plausibilitätsprüfung erzeugt. Eine Plausibilitätsprüfung kann beispielsweise die Prüfung umfassen, ob eine von einer Funktionseinheit benötigte Resource überhaupt zur Verfügung steht.

Vorzugsweise wird zur Durchführung der Plausibilitätsprüfung die mindestens eine Hardwareeigenschaft verwendet. Dadurch kann der Automatisierungsgrad besonders gut erhöht werden und eine zuverlässige Konfiguration des Computerprogramms erreicht werden. Sieht eine Funktionseinheit beispielsweise eine Erfassung von Messwerten vor, so kann überprüft werden, ob geeignete Sensoren vorhanden sind und ob diese die angeforderte Messgenauigkeit zur Verfügung stellen. In diesem Fall ist es beispielsweise vorstellbar, dass automatisch eine Konfiguration des Sensors durchgeführt wird.

In einer weiteren bevorzugten Ausführungsform wird automatisch eine Dokumentation erstellt. Die Dokumentation beschreibt die innerhalb der mindestens einen implementierungsunabhängigen Konfigurationsdatei und/oder der mindestens einen implementierungsabhängigen Konfigurationsdatei abgelegten Informationen. Derartig automatisch erzeugte Dokumentationen erhöhen die Wartbarkeit des Computerprogramms einerseits und ermöglichen es andererseits besonders einfach, eine durchgeführte Konfiguration nachzuvollziehen. Durch die automatische Erzeugung der Dokumentation ist sichergestellt, dass diese mit der tatsächlichen Konfiguration übereinstimmt. Soll eine neue Konfiguration des Computerprogramms durchgeführt werden, so kann anhand einer derartigen Dokumentation besonders einfach festgestellt werden, welche Parameterwerte geändert werden müssen.

Vorzugsweise wird die mindestens eine implementierungsunabhängige Konfigurationsdatei in einem XML-basierten Format erstellt. XML (Extensible Markup Language) ist eine standardisierte Metasprache, die es ermöglicht, strukturierte Sprachen zu erzeugen. Ist die mindestens eine implementierungsunabhängige Konfigurationsdatei in einer XML-konformen, strukturierten Sprache erstellt, so wird eine Konfiguration dadurch erleichtert, dass eine derartige implementierungsunabhängige Konfigurationdatei besonders gut lesbar ist. Ferner ist eine derartige Konfigurationsdatei auch besonders gut maschinenlesbar. Insbesondere existiert eine Vielzahl von teilweise ebenfalls standardisierten Software-Werkzeugen (Tools), mittels derer eine Bearbeitung und Verarbeitung von in einem XML-basierten Format erstellten Dateien möglich ist.

In einer bevorzugten Ausführungsform des Verfahrens wird in Abhängigkeit von den Konfigurationsdaten automatisch ermittelt, ob eine von dem Computerprogramm umfasste Funktionseinheit von dem Computerprogramm benötigt wird und eine Konfiguration dieser Funktionseinheit nur durchgeführt, falls die Funktionseinheit von dem Computerprogramm benötigt wird. Dies ermöglicht es, eine Konfiguration besonders schnell durchzuführen dadurch, dass nur derartige Funktionseinheiten tatsächlich konfiguriert werden, die bei einer Ausführung des konfigurierten Computerprogramms tatsächlich benötigt werden. Des Weiteren wird dadurch erreicht, dass das konfigurierte Computerprogramm möglichst wenig Speicherplatz in Anspruch nimmt, da beispielsweise eine Übersetzung von Source-Code in Maschinencode nur für derartige Funktionseinheiten veranlasst wird, die tatsächlich angewendet werden sollen.

Die Aufgabe wird auch durch ein Softwaresystem der eingangs genannten Art gelöst. Dabei weist das Softwaresystem auf:
- mindestens eine implementierungsunabhängige Konfigurationsdatei;
- einen Konfigurationsdaten umfassenden Konfigurationsdatencontainer und/oder Mittel zum Erstellen eines Konfigurationsdatencontainers in Abhängigkeit von in der mindestens einen implementierungsunabhängigen Konfigurationsdatei abgelegten Informationen;
- Mittel zum Ändern und/oder Auslesen von Konfigurationsdaten aus dem Konfigurationsdatencontainer;
- Mittel zum automatischen Erzeugen mindestens einer implementierungsabhängigen Konfigurationsdatei in Abhängigkeit von in dem Konfigurationsdatencontainer abgespeicherten Konfigurationsdaten; und
- Mittel zum automatischen Konfigurieren der mindestens einen Funktionseinheit in Abhängigkeit von in der implementierungsabhängigen Konfigurationsdatei abgelegten Informationen.

Vorzugsweise weist das Softwaresystem Mittel zur Durchführung des erfindungsgemäßen Verfahrens auf.

Die Realisierung der Erfindung in Form eines Softwaresystems ist hierbei von besonderer Bedeutung. Dabei ist das Softwaresystem auf einem Rechengerät, insbesondere auf einem Mikroprozessor ablauffähig und zur Ausführung des erfindungsgemäßen Verfahrens geeignet. In diesem Fall wird also die Erfindung durch das Softwaresystem realisiert, so dass das Softwaresystem in gleicher Weise die Erfindung darstellt wie das Verfahren, zu dessen Ausführung das Softwaresystem geeignet ist. Das Softwaresystem ist vorzugsweise auf einem Speicherelement abgespeichert. Das Speicherelement kann als Random-Access-Memory, Read-Only-Memory oder Flash-Memory ausgebildet sein. Das Speicherelement kann auch als Digital Versatile Disc (DVD), Compact Disc (CD) oder als Festplatte (Hard Disc) ausgebildet sein.

### Zeichnungen

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung beziehungsweise Darstellung in der Beschreibung beziehungsweise in der Zeichnung. Es zeigen:
- Figur 1: eine Ausführungsform eines Softwaresystems zur Durchführung des erfindungsgemäßen Verfahrens; und
- Figur 2: ein schematisiertes Ablaufdiagramm einer Ausführungsform des erfindungsgemäßen Verfahrens.

### Beschreibung der Ausführungsbeispiele

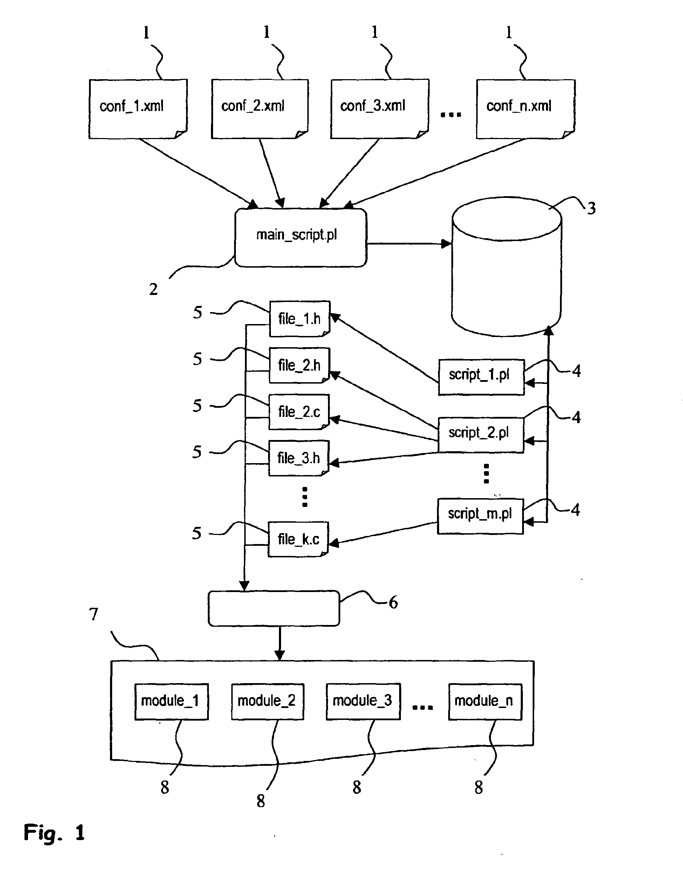

In Figur 1 ist ein Softwaresystem zur Durchführung des erfindungsgemäßen Verfahrens dargestellt. Das Softwaresystem weist mehrere implementierungsunabhängige Konfigurationsdateien 1 auf. Jeder Konfigurationsdatei 1 ist ein Dateiname zugeordnet. Die in Figur 1 dargestellten implementierungsunabhängigen Konfigurationsdateien tragen beispielsweise die Dateinamen conf_1.xml, conf_2.xml, conf_3.xml bis conf_n.xml. Die Dateiendung .xml weist darauf hin, dass die implementierungsunabhängigen Konfigurationsdateien 1 in einem XML-basierten Format vorliegen. Eine in einem XML-basierten Format vorliegende Text-Datei ermöglicht es, die Text-Datei nach vorgebbaren Regeln zu strukturieren. Eine derartig strukturierte Text-Datei kann besonders gut manuell und maschinell gelesen und verarbeitet werden.

Die implementierungsunabhängigen Konfigurationsdateien 1 werden einem Script 2 zugeführt. Das Script 2 ist beispielsweise als sogenanntes Perl-Script ausgebildet. Perl ist eine Interpretersprache, deren Syntax auf der Programmiersprache C basiert und die von dem jeweiligen Betriebssystem zur Verfügung gestellte Dienstprogramme verwendet.

Mittels des Scripts 2 werden die implementierungsunabhängigen Konfigurationsdateien 1 gelesen und die darin abgelegten Informationen extrahiert und in einem Konfigurationsdatencontainer 3 abgelegt. Gleichzeitig werden auch eventuell vorhandene Abhängigkeiten zu den weiteren Konfigurationsscripten 4 bestimmt und abgelegt.

Mit dem Bezugszeichen 4 sind weitere Konfigurationsscripte dargestellt. Diese sind ebenfalls als Pearl-Scripte ausgebildet. Es ist ebenso vorstellbar, dass eines oder mehrere der weiteren Konfigurationsscripte 4 ein ausführbares Computerprogramm (Maschinencode) ist oder in einer anderen Scriptsprache, beispielsweise AWK, vorliegt.

Mit dem Bezugszeichen 5 sind implementierungsabhängige Konfigurationsdateien bezeichnet. Die implementierungsabhängigen Konfigurationsdateien 5 sind beispielsweise in der Programmiersprache codiert, in der auch der zu konfigurierende Source-Code programmiert ist. Derartige implementierungsabhängige Konfigurationsdateien können von einem Compiler 6 verarbeitet werden.

Mit dem Bezugszeichen 7 ist ein Computerprogramm dargestellt, das mehrere Funktionseinheiten 8 aufweist.

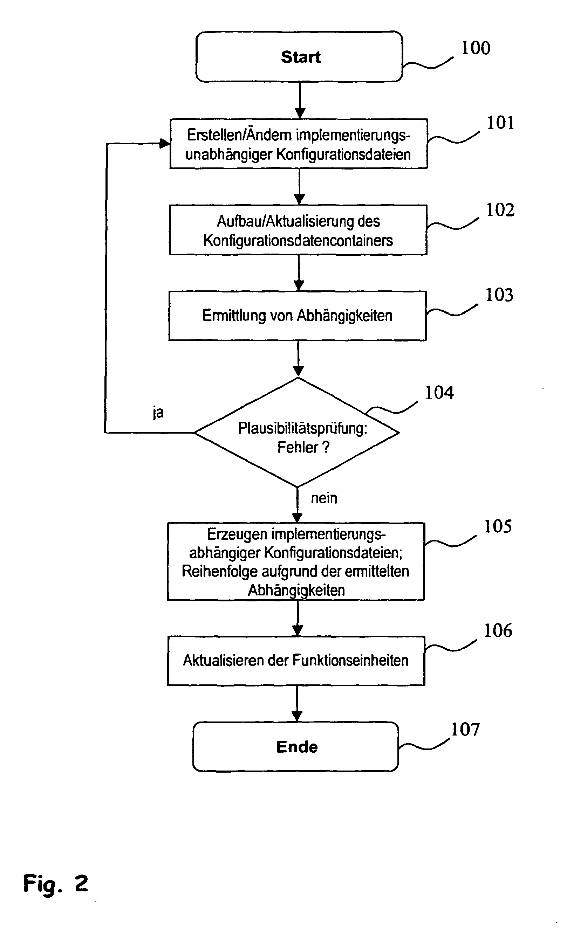

Die Funktionsweise des erfindungsgemäßen Softwaresystems wird anhand des in Figur 2 dargestellten Ablaufdiagramms beschrieben.

Das in Figur 2 dargestellte Ablaufdiagramm eines erfindungsgemäßen Verfahrens zur Konfiguration eines Computerprogramms startet in einem Schritt 100. In einem Schritt 101 werden implementierungsunabhängige Konfigurationsdateien 1 erstellt beziehungsweise geändert. Die implementierungsunabhängigen Konfigurationsdateien 1 zeichnen sich insbesondere dadurch aus, dass es möglich ist, mittels der dort abgelegten Informationen konkrete Konfigurationswerte beziehungsweise Konfigurationsparameter abstrakt zu beschreiben. Konkrete Konfigurationswerte können beispielsweise den Messbereich eines Sensormoduls zur Messung einer elektrischen Spannung bestimmen. Beispielsweise ist es möglich, einen Messbereich abstrakt mit den Werten 3 - 5 Volt anzugeben. Die daraus zu erzeugenden, implementierungsabhängigen Werte des Messbereichs so, wie es die zu konfigurierende Funktionseinheit 8 erwartet, können jedoch beispielsweise zwischen 10.000 und 20.000 liegen. Eine das Sensormodul steuernde Funktionseinheit 8 des Computerprogramm müsste in diesem Fall beispielsweise mittels der konkreten Konfigurationswerte 10.000 und 20.000 konfiguriert werden , um eine Messung in einem Messbereich von 3 - 5 Volt zu ermöglichen.

Die in dem Schritt 101 erstellten beziehungsweise geänderten implementierungsunabhängigen Konfigurationsdateien 1 sind beispielsweise in einem XML-basierten Format erstellt. Ein derartiges Format ermöglicht es besonders gut, eine übersichtliche Strukturierung der implementierungsunabhängigen Konfigurationsdateien 1 zu erreichen. Dies erhöht die Lesbarkeit der implementierungsunabhängigen Konfigurationsdateien 1 und vereinfacht die Änderung der implementierungsunabhängigen Konfigurationsdateien 1 beispielsweise dadurch dass zu ändernde Konfigurationsdaten schnell aufgefunden werden können. Es ist möglich, auch für ein besonders großes Computerprogramm, für dessen Konfiguration eine Vielzahl von Konfigurationsdaten notwendig sind, nur eine einzige implementierungsunabhängige Konfigurationsdatei vorzusehen. Eine Strukturierung der in der implementierungsunabhängigen Konfigurationsdatei 1 abgelegten Informationen kann dabei durch geeignete XML-Strukturen erreicht werden. Besonders vorteilhaft jedoch ist es, mehrere implementierungsunabhängige Konfigurationsdateien vorzusehen. Jede dieser implementierungsunabhängigen Konfigurationsdateien 1 kann beispielsweise einer oder mehrerer Funktionseinheiten 8 zugeordnet sein. Dadurch ist es möglich, das Erstellen beziehungsweise Ändern der implementierungsunabhängigen Konfigurationsdateien besonders übersichtlich durchzuführen. Des Weiteren wird dadurch eine Wiederverwendbarkeit einzelner implementierungsunabhängiger Konfigurationsdateien erhöht. Dies ist insbesondere für Projekte vorteilhaft, bei denen auch einzelne Funktionseinheiten 8 des Source-Codes wiederverwendet werden sollen.

In einem Schritt 102 wird der Konfigurationsdatencontainer 3 aufgebaut, beziehungsweise aktualisiert. Dies geschieht durch Abarbeiten der in dem Script 2 aufgelisteten Anweisungen. Das Script 2 veranlasst zunächst, dass die unabhängigen Konfigurationsdateien 1 eingelesen werden. Liegt den implementierungsunabhängigen Konfigurationsdateien 1 ein strukturiertes Format, beispielsweise ein XML-basiertes Format zugrunde, so kann mittels des Scripts 2 besonders gut eine syntaktische und/oder semantische Analyse des Inhalts der implementierungsunabhängigen Konfigurationsdateien 1 durchgeführt werden. Damit können beispielsweise Fehler bei der Angabe von Konfigurationsdaten erkannt werden. Vorzugsweise weist das XML-basierte Format der implementierungsunabhängigen Konfigurationsdateien 1 eine hierarchische Struktur auf, die sich vorteilhafterweise an der Struktur der Funktionseinheiten 8 selbst, deren Abhängigkeiten und/oder deren thematische Nähe orientiert. Mittels des Scripts 2 können Fehler beim Aufbau dieser hierarchischen Struktur und damit auch beim Aufbau des Source-Codes selbst erkannt werden.

Vorteilhafterweise weist der Schritt 102 eine Behandlung der aufgefundenen Fehler auf. Dies kann beispielsweise durch die Ausgabe von Fehlerinformationen geschehen. Es ist ebenso vorstellbar, dass stochastische Verfahren zur Beseitigung von Fehlern eingesetzt werden.

Das Script 2 extrahiert in dem Schritt 102 die in den implementierungsunabhängigen Konfigurationsdateien 1 vorhandenen Konfigurationsdaten und speichert diese in dem Konfigurationsdatencontainer 3 ab. Der Konfigurationsdatencontainer 3 kann dabei beispielsweise als Datenbank ausgebildet sein. Es ist ebenso vorstellbar, dass der Konfigurationsdatencontainer 3 als in einem Speicherbereich vorgehaltene Datenstruktur innerhalb des erfindungsgemäßen Softwaresystems realisiert ist, wobei gewährleistet ist, dass das Script 2 schreibenden und lesenden Zugriff auf die in dem Konfigurationsdatencontainer 3 abgelegten Konfigurationsdaten hat.

In einem Schritt 103 werden Abhängigkeiten ermittelt. Eine derartige Abhängigkeit kann beispielsweise beschreiben, welche Funktionseinheiten 8 des Computerprogramms bei der vorliegenden Konfiguration tatsächlich abgearbeitet werden müssen. Mittels dieser Abhängigkeiten kann entschieden werden, ob in einem der folgenden Schritte für eine bestimmte Funktionseinheit 8 überhaupt eine implementierungsabhängige Konfigurationsdatei erzeugt werden muss. Abhängigkeiten können ferner beschreiben, welche konkreten Konfigurationsdaten von welchen abstrakten Konfigurationsdaten abhängen. So ist es vorstellbar, dass die Änderung eines abstrakten Konfigurationsdatums in einer implementierungsunabhängigen Konfigurationsdatei eine Änderung einer Mehrzahl von konkreten Konfigurationsdaten bewirkt.

Abhängigkeiten können sich auch ergeben, wenn die weiteren Scripte 4 ihrerseits den Konfigurationscontainer 3 verändern. Somit muss die richtige Aufrufreihenfolge (Aktivierungssequenz) der Scripte 4 ermittelt und abgelegt werden. Abhängigkeiten können auch Beziehungen zwischen einer oder mehrerer Hardwarekomponenten und einzelner Konfigurationsdaten beschreiben. Dies ermöglicht es beispielsweise zu erkennen, ob eine vorgesehene Konfiguration auf einer bestimmten Hardware tatsächlich ablauffähig ist.

In einem Schritt 104 wird eine Plausibilitätsprüfung durchgeführt. Dabei wird insbesondere anhand der in Schritt 103 ermittelten Abhängigkeiten überprüft, ob die mittels der implementierungsunabhängigen Konfigurationsdateien 1 vorgegebene Konfiguration Fehler aufweist. Ist dies der Fall, so wird in den Schritt 101 zurückverzweigt, in welchem eine Änderung der implementierungsunabhängigen Konfigurationsdateien 1 mit dem Zwecke einer Fehlerbeseitigung durchgeführt wird. Werden in dem Schritt 104 keine Fehler erkannt, so wird zu einem Schritt 105 verzweigt.

In dem Schritt 105 werden die implementierungsabhängigen Konfigurationsdateien 5 erzeugt. Dazu werden mittels eines Scripts 4 oder einer Mehrzahl von Scripten 4 zunächst die in dem Konfigurationsdatencontainer 3 abgelegten Konfigurationsdaten abgerufen. In dem vorliegenden Ausführungsbeispiel sind die Scripte 4 als Pearl-Scripte ausgebildet. Mittels der Scripte 4 werden insbesondere in dem Konfigurationsdatencontainer 3 abgelegte abstrakte Konfigurationsdaten in konkrete Konfigurationsdaten umgewandelt, die dann in den implementierungsabhängigen Konfigurationsdateien 5 abgelegt werden. Vorzugsweise werden dabei auch die in dem Schritt 103 ermittelten Abhängigkeiten verwendet.

Die in dem Schritt 105 erzeugten implementierungsabhängigen Konfigurationsdateien 5 können beispielsweise Header-Dateien (file_.h, file_2.h, file_3.h in Figur 1) sein. Ebenso können die erzeugten implementierungsabhängigen Konfigurationsdateien 5 auch Source-Code enthalten (file_2.c, file_k.c in Figur 1). Typischerweise sind die von den Scripten 4 aus den abstrakten Konfigurationsdaten erzeugten konkreten Konfigurationsdaten durch Wertzuweisungen für Variablen und/oder Funktionsparameter sowie als Anweisungen in einer Programmiersprache realisiert. Dabei entspricht die Programmiersprache der Programmiersprache, in der die Funktionseinheiten 8 des Computerprogramms 7 codiert sind. Sind die Funktionseinheiten 8 des Computerprogramm 7 beispielsweise in der Programmiersprache C⁺⁺ codiert, so können die konkreten Konfigurationsdaten beispielsweise durch sogenannte #Define-Anweisungen oder durch die Definition konstanter Variablen realisiert werden. Mittels der Scripte 4 ist es auch möglich, in Abhängigkeit der in dem Konfigurationsdatencontainer 3 abgespeicherten Konfigurationsdaten Funktionen zu erzeugen, die komplexe Aufgaben - wie beispielsweise die Initialisierung von Hardwarekomponenten oder die Prüfung auf das Vorhandensein einzelner Softwarekomponenten oder Hardwarekomponenten - übernehmen und selbst als Source-Code in einer höheren Programmiersprache realisiert sind. Dieser Source-Code kann dann in einer oder mehreren implementierungsabhängigen Konfigurationsdateien (file_2.c, file_k.c in Figur 1) abgelegt werden. Dazu kann ein Script 4 beispielsweise ein sogenanntes Template enthalten, das beispielsweise aus Anweisungen in C++ besteht, die in Abhängigkeit der in dem Konfigurationsdatencontainer 3 abgespeicherten Konfigurationsdaten aktualisiert werden und in einer implementierungsabhängigen Konfigurationsdatei 5 abgelegt werden.

In einem Schritt 107 werden die Funktionseinheiten 8 des Computerprogramms 7 aktualisiert. Dies kann beispielsweise durch den automatischen Aufruf eines Compilers 6 geschehen, der die in einem Source-Code vorliegenden Funktionseinheiten 8 in einen Maschinencode übersetzt. Dazu liest der Compiler 6 die implementierungsabhängigen Konfigurationsdateien 5 ein und steuert die Erzeugung des Maschinencodes in Abhängigkeit der in den implementierungsabhängigen Konfigurationsdateien 5 abgelegten konkreten Konfigurationsdaten. Es ist auch vorstellbar, dass eine oder mehrere Funktionseinheiten 8 bereits in Maschinencode vorliegen. In diesem Fall kann der Compiler beispielsweise den von den Scripten 4 erzeugten Source-Code (file_2c, file_kc in Figur 1) unter Berücksichtigung der Header-Dateien (file_1.h, file_2.h, file_3.h) in Maschinencode übersetzen und den so übersetzten Maschinencode mittels eines dem Compiler 6 zugeordneten sogenannten Linkers mit dem die Funktionseinheiten 8 repräsentierenden Maschinencode verbinden.

In einem Schritt 108 endet das Verfahren. In diesem Schritt ist das Computerprogramm 7 derart konfiguriert, dass die in den implementierungsunabhängigen Konfigurationsdateien abgelegten konkreten Konfigurationsdaten in dem erzeugten Maschinencode berücksichtigt werden.

Selbstverständlich ist es möglich, dass das Script 2 und/oder die Scripte 4 in einer anderen Scriptsprache geschrieben sind oder als ausführbare Programme ausgestaltet sind.

Die in Figur 2 dargestellten Ausführungsschritte können selbstverständlich variieren und die Reihenfolge der Abarbeitung kann teilweise verändert werden. So ist es vorstellbar, dass die Plausibilitätsprüfung 104 durch eines oder mehrere der Scripte 4 durchgeführt wird.

Das Verfahren kann insbesondere auch von einer oder mehreren implementierungsunabhängigen Konfigurationsdateien ausgehen, ein oder mehrere Scripte 2 aufweisen, die beispielsweise hintereinander ausgeführt werden, ein oder mehrere Scripte 4 aufweisen, die jeweils ein oder mehrere implementierungsabhängige Konfigurationsdateien 5 erzeugen und selbstverständlich kann das Computerprogramm 7 ein oder mehrere Funktionseinheiten 8 aufweisen. Mit dem erfindungsgemäßen Verfahren ist es insbesondere möglich zu erkennen, ob eine oder mehrere der Funktionseinheiten 8 bei der durch die implementierungsunabhängigen Konfigurationsdateien vorgegebenen Konfiguration tatsächlich zur Anwendung kommen. Ist dies nicht der Fall, kann dies durch ein dem Konfigurationsdatencontainer 3 zugeordnetes, nicht dargestelltes Softwaretool erkannt werden. Dies ermöglicht es, dass eine derartige Funktionseinheit 8 nicht konfiguriert wird und mittels der implementierungsabhängigen Konfigurationsdateien 5 der Compiler 6 veranlasst wird, die Funktionseinheit 8 nicht mit in den zu erzeugenden Maschinencode zu übernehmen. Dadurch kann das erfindungsgemäße Verfahren besonders schnell durchgeführt werden. Der von einem Computerprogramm, das mittels des erfindungsgemäßen Verfahrens konfiguriert wurde, erzeugte Maschinencode kann dabei besonders kompakt sein und somit Speicherplatz einsparen.

Es ist möglich, dass das Script 2 selbst bereits die Erzeugung einer oder einer Mehrzahl von implementierungsabhängigen Konfigurationsdateien 5 veranlasst. Dadurch kann das erfindungsgemäße Verfahren besonders schnell durchgeführt werden. Dies kann beispielsweise vorteilhaft für abstrakte Konfigurationsdaten sein, die keine Abhängigkeiten aufweisen und sich von den konkreten Konfigurationsdaten unterscheiden.

## Patentansprüche

1. Verfahren zur Konfiguration eines mindestens eine Funktionseinheit (8) umfassenden Computerprogramms, bei dem
- mindestens eine implementierungsunabhängige Konfigurationsdatei (1) erzeugt wird und/oder in der mindestens einen implementierungsunabhängigen Konfigurationsdatei (1) abgelegte Informationen geändert werden;
- automatische mindestens eine implementierungsabhängige Konfigurationsdatei (5) erzeugt wird; und
- die mindestens eine Funktionseinheit (8) in Abhängigkeit von in der mindestens einen implementierungsabhängigen Konfigurationsdatei (5) abgelegten Informationen konfiguriert wird.
**dadurch gekennzeichnet, dass:**
- die in der implementierungsabhängigen Konfigurationsdatei (5) abgelegten Informationen konkrete Konfigurationsparameter abstrakt beschreiben;
- die in der implementierungsunabhängigen Konfigurationsdatei (1) abgelegten Informationen extrahiert und in einem Konfigurationsdatencontainer (3) abgespeichert werden;
- mindestens eine Abhängigkeitsinformation automatisch erzeugt wird, wobei die Abhängigkeitsinformation eine Abhängigkeit mindestens einer Hardwarekomponente von mindestens einem in dem Konfigurationsdatencontainer (3) vorliegenden abstrakten Konfigurationsdatum beschreibt; und
- die implementierungsabhängige Konfigurationsdatei (5) in Abhängigkeit von den in dem Konfigurationsdatencontainer (3) abgespeicherten abstrakten Konfigurationsdaten, mindestens einer Eigenschaft einer Hardware und der mindestens einen Abhängigkeitsinformation erzeugt wird, wobei die implementierungsabhängige Konfigurationsdatei (5) konkrete Konfigurationsdaten umfasst.

2. Verfahren nach Anspruch 1 **dadurch gekennzeichnet, dass** mindestens eine weitere Abhängigkeitsinformation automatisch erzeugt wird und dass die mindestens eine implementierungsabhängige Konfigurationsdatei (5) in Abhängigkeit von der mindestens einen weiteren Abhängigkeitsinformation erzeugt wird, wobei die weitere Abhängigkeitsinformation eine Abhängigkeit von mindestens zwei in dem Konfigurationsdatencontainer (3) vorliegenden Konfigurationsdaten beschreibt.

3. Verfahren nach einem der vorangehenden Ansprüche, wobei das Computerprogramm mehrere Funktionseinheiten (8) aufweist, **dadurch gekennzeichnet, dass** mehrere implementierungsunabhängige Konfigurationsdateien (1) erstellt werden und jede der implementierungsunabhängigen Konfigurationsdateien (1) mindestens einer Funktionseinheit (8) zugeordnet wird.

4. Verfahren nach einem der vorangehenden Ansprüche, wobei das Computerprogramm mehrere Funktionseinheiten (8) aufweist, **dadurch gekennzeichnet, dass** mehrere implementierungsabhängige Konfigurationsdateien (5) erzeugt werden und jede der implementierungsabhängigen Konfigurationsdateien (5) mindestens einer Funktionseinheit (8) zugeordnet wird.

5. Verfahren nach einem der vorangehenden Ansprüche, **dadurch gekennzeichnet, dass** eine weitere Abhängigkeitsinformation automatisch erzeugt wird und dass die mindestens eine implementierungsabhängige Konfigurationsdatei (5) in Abhängigkeit der mindestens einen weiteren Abhängigkeitsinformation erzeugt wird, wobei die weitere Abhängigkeitsinformation eine Abhängigkeit einer Funktionseinheit (8) von mindestens einem in dem Konfigurationsdatencontainer (3) vorliegenden Konfigurationsdatum beschreibt.

6. Verfahren nach einem der vorangehenden Ansprüche, bei dem die mindestens eine implementierungsabhängige Konfigurationsdatei (5) in Abhängigkeit von dem Ergebnis einer Plausibilitätsprüfung erzeugt wird.

7. Verfahren nach Anspruch 5 und 6, **dadurch gekennzeichnet, dass** zur Durchführung der Plausibilitätsprüfung die mindestens eine Hardware-Eigenschaft verwendet wird.

8. Verfahren nach einem der vorangehenden Ansprüche, **dadurch gekennzeichnet, dass** automatisch eine Dokumentation erstellt wird und die Dokumentation die innerhalb der mindestens einen implementierungsunabhängigen Konfigurationsdatei und/oder der mindestens einen implementierungsabhängigen Konfigurationsdatei abgelegten Informationen beschreibt.

9. Verfahren nach einem der vorangehenden Ansprüche, **dadurch gekennzeichnet, dass** die mindestens eine implementierungsunabhängige Konfigurationsdatei (1) in einem XML-basierten Format erstellt wird.

10. Verfahren nach einem der vorangehenden Ansprüche, **dadurch gekennzeichnet, dass** in Abhängigkeit von den abstrakten Konfigurationsdaten automatisch ermittelt wird, ob eine von dem Computerprogramm umfasste Funktionseinheit (8) von dem Computerprogramm benötigt wird und eine Konfiguration dieser Funktionseinheit (8) nur durchgeführt wird, falls die Funktionseinheit (8) von dem Computerprogramm benötigt wird.

11. Verfahren nach einem der vorangehenden Ansprüche, **dadurch gekennzeichnet, dass** die Änderung eines abstrakten Konfigurationsdatums in einer implementierungsunabhängigen Konfigurationsdatei (1) eine Änderung einer Mehrzahl von konkreten Konfigurationsdaten bewirkt.

12. Softwaresystem zur Konfiguration eines mindestens eine Funktionseinheit (8) umfassenden Computerprogramms, wobei das Softwaresystem
- mindestens eine implementierungsunabhängige Konfigurationsdatei (1);
- Mittel zum automatischen Erzeugen mindestens einer implementierungsabhängigen Konfigurationsdatei (5); und
- Mittel zum automatischen Konfigurieren der mindestens einen Funktionseinheit (8) in Abhängigkeit von in der implementierungsabhängigen Konfigurationsdatei (5) abgelegten Informationen aufweist,
**dadurch gekennzeichnet, dass**
- in der implementierungsunabhängigen Konfigurationsdatei (1) abstrakte Konfigurationsdaten abgespeichert sind, die konkrete Konfigurationsparameter abstrakt beschreiben;
- das Softwaresystem Mittel zum Extrahieren von in der mindestens einen implementierungsunabhängigen Konfigurationsdatei (1) abgelegten abstrakten Informationen aufweist;
- das Softwaresystem Mittel zum Abspeichern der extrahierten Informationen in einem Konfigurationsdatencontainer (3) aufweist;
- das Softwaresystem Mittel zum Ändern und/oder Auslesen von Konfigurationsdaten aus dem Konfigurationsdatencontainer (3) aufweist;
- das Softwaresystem Mittel zum automatischen Erzeugen mindestens einer Abhängigkeitsinformation umfasst, wobei die Abhängigkeitsinformation eine Abhängigkeit mindestens einer Hardwarekomponente von mindestens einem in dem Konfigurationsdatencontainer (3) vorliegenden Konfigurationsdatum beschreibt; und
- das Softwaresystem Mittel aufweist zum automatischen Erzeugen mindestens einer implementierungsabhängigen Konfigurationsdatei in Abhängigkeit von in dem Konfigurationsdatencontainer (3) abgespeicherten abstrakten Konfigurationsdaten, mindestens einer Eigenschaft einer Hardware und der mindestens einen Abhängigkeits-information.

13. Softwaresystem nach Anspruch 12, **dadurch gekennzeichnet, dass** das Softwaresystem Mittel zur Durchführung eines Verfahrens nach einem der Ansprüche 2 bis 11 aufweist.

14. Softwaresystem nach Anspruch 12 oder 13, **dadurch gekennzeichnet, dass** das Softwaresystem auf einem Speichermedium abgespeichert wird.

15. Softwaresystem nach Anspruch 14, **dadurch gekennzeichnet, dass** das Softwaresystem auf einem Random-Access-Memory, auf einem Read-Only-Memory, auf einem Flash-Memory, auf einer Digital Versatile Disk (DVD), einer Compact Disc (CD) oder auf eine Festplatte (Hard Disc) abgespeichert ist.

16. Rechengerät, insbesondere Steuergerät, das einen Mikroprozessor aufweist, **dadurch gekennzeichnet, dass** das Rechengerät zur Durchführung eines Verfahrens nach einem der Ansprüche 1 bis 11 programmiert ist.

## Claims

1. Method for configuring a computer program comprising at least one functional unit (8), in which method
- at least one implementation-independent configuration file (1) is generated and/or information stored in the at least one implementation-independent configuration file (1) is altered;
- at least one implementation-dependent configuration file (5) is automatically generated; and
- the at least one functional unit (8) is configured as a function of information stored in the at least one implementation-dependent configuration file (5),
**characterized in that:**
- the information stored in the implementation-dependent configuration file (5) describes specific configuration parameters in an abstract manner;
- the information stored in the implementation-independent configuration file (1) is extracted and stored in a configuration data container (3);
- at least one item of dependency information is automatically generated, with the dependency information describing a dependency of at least one hardware component on at least one item of configuration data which is present in abstract form in the configuration data container (3); and
- the implementation-dependent configuration file (5) is generated as a function of the abstract configuration data stored in the configuration data container (3), at least one property of the hardware and the at least one item of dependency information, with the implementation-dependent configuration file (5) comprising specific configuration data.

2. Method according to Claim 1, **characterized in that** at least one further item of dependency information is automatically generated, and **in that** the at least one implementation-dependent configuration file (5) is generated as a function of the at least one further item of dependency information, with the further dependency information describing a dependency on at least two items of configuration data present in the configuration data container (3).

3. Method according to one of the preceding claims, with the computer program having a plurality of functional units (8), **characterized in that** a plurality of implementation-independent configuration files (1) are created and each of the implementation-independent configuration files (1) is assigned to at least one functional unit (8).

4. Method according to one of the preceding claims, with the computer program having a plurality of functional units (8), **characterized in that** a plurality of implementation-dependent configuration files (5) are generated and each of the implementation-dependent configuration files (5) is assigned to at least one functional unit (8).

5. Method according to one of the preceding claims, **characterized in that** a further item of dependency information is automatically generated, and **in that** the at least one implementation-dependent configuration file (5) is generated as a function of the at least one further item of dependency information, with the further dependency information describing a dependency of a functional unit (8) on at least one item of configuration data present in the configuration data container (3).

6. Method according to one of the preceding claims, in which method the at least one implementation-dependent configuration file (5) is generated as a function of the result of a plausibility check.

7. Method according to Claims 5 and 6, **characterized in that** the at least one hardware property is used to carry out the plausibility check.

8. Method according to one of the preceding claims, **characterized in that** documentation is automatically created and the documentation describes the information stored within the at least one implementation-independent configuration file and/or the at least one implementation-dependent configuration file.

9. Method according to one of the preceding claims, **characterized in that** the at least one implementation-independent configuration file (1) is created in an XML-based format.

10. Method according to one of the preceding claims, **characterized in that** the abstract configuration data is used to automatically determine whether a functional unit (8) which is part of the computer program is required by the computer program, and configuration of this functional unit (8) is carried out only if the functional unit (8) is required by the computer program.

11. Method according to one of the preceding claims, **characterized in that** the change in an abstract item of configuration data in an implementation-independent configuration file (1) causes a change in a multiplicity of specific items of configuration data.

12. Software system for configuring a computer program comprising at least one functional unit (8), with the software system having
- at least one implementation-independent configuration file (1);
- means for automatically generating at least one implementation-dependent configuration file (5); and
- means for automatically configuring the at least one functional unit (8) as a function of information stored in the implementation-dependent configuration file (5),
**characterized in that**
- abstract configuration data which describes specific configuration parameters in an abstract manner is stored in the implementation-independent configuration file (1);
- the software system has means for extracting abstract information stored in the at least one implementation-independent configuration file (1);
- the software system has means for storing the extracted information in a configuration data container (3);
- the software system has means for altering and/or reading out configuration data from the configuration data container (3);
- the software system comprises means for automatically generating at least one item of dependency information, with the dependency information describing a dependency of at least one hardware component on at least one item of configuration data present in the configuration data container (3); and
- the software system has means for automatically generating at least one implementation-dependent configuration file as a function of abstract configuration data stored in the configuration data container (3), at least one property of the hardware and the at least one item of dependency information.

13. Software system according to Claim 12, **characterized in that** the software system has means for carrying out a method according to one of Claims 2 to 11.

14. Software system according to Claim 12 or 13, **characterized in that** the software system is stored in a storage medium.

15. Software system according to Claim 14, **characterized in that** the software system is stored in a random access memory, in a read-only memory, in a flash memory, on a digital versatile disc (DVD), a compact disc (CD) or on a hard disc.

16. Computer device, in particular control device, which has a microprocessor, **characterized in that** the computer device is programmed for carrying out a method according to one of Claims 1 to 11.

## Revendications

1. Procédé de configuration d'un programme informatique comportant au moins une unité fonctionnelle (8) selon lequel,
- on génère au moins un fichier de configurations (1) indépendant de l'implémentation et/ou on modifie les informations enregistrées dans au moins un fichier de configurations (1) indépendant de l'implémentation,
- on génère automatiquement au moins un fichier de configurations (5) dépendant de l'implémentation, et
- on configure au moins une unité fonctionnelle (8) en fonction d'informations enregistrées dans au moins un fichier de configurations (5) dépendant de l'implémentation,
**caractérisé en ce qu'**
- on décrit de manière abstraite les paramètres concrets de configurations informatiques enregistrés dans le fichier de configurations (5) indépendant de l'implémentation ;
- on extrait les informations enregistrées dans le fichier de configurations (1) dépendant de la l'implémentation et on les enregistre dans un conteneur de données de configuration (3) ;
- on génère automatiquement au moins une information de dépendance et cette information de dépendance décrit la relation entre au moins un composant de circuit par rapport et au moins une donnée de configuration abstraite contenue dans le conteneur de données de configuration (3), et
- on génère le fichier de configurations (5) dépendant de l'implémentation en fonction des données de configurations abstraites enregistrées dans le conteneur de données de configuration (3), pour au moins une propriété d'un circuit et au moins une information de dépendance,
- le fichier de configurations (5) dépendant de l'implémentation comprend des données de configurations concrètes.

2. Procédé selon la revendication 1,
**caractérisé en ce qu'**
on génère automatiquement au moins une autre information de dépendance, et
on génère le fichier de configurations (5) dépendant de l'implémentation en fonction d'au moins une autre information de dépendance,
cette autre information de dépendance décrivant la relation entre au moins deux données de configurations existantes dans le conteneur de données de configurations (3).

3. Procédé selon l'une des revendications précédentes, selon lequel le programme informatique comporte plusieurs unités fonctionnelles (8),
**caractérisé en ce qu'**
on établit plusieurs fichiers de configurations (1) indépendant de l'implémentation et à chacun des fichiers de configurations (1), indépendant de l'implémentation, on associe au moins une unité fonctionnelle (8).

4. Procédé selon l'une des revendications précédentes, selon lequel le programme informatique comporte plusieurs unités fonctionnelles (8),
**caractérisé en ce qu'**
on génère plusieurs fichiers de configurations (5) dépendant de l'implémentation et à chaque fichier de configurations (5) dépendant de l'implémentation, on associe au moins une unité fonctionnelle (8).

5. Procédé selon l'une des revendications précédentes,
**caractérisé en ce qu'**
on génère automatiquement une autre information de dépendance, et on génère au moins un fichier de configurations (5) dépendant de l'implémentation en fonction au moins d'une autre information de dépendance,
cette autre information de dépendance décrivant la dépendance d'une unité fonctionnelle (8) par rapport à au moins une donnée de configurations faisant partie du conteneur de données de configurations (3).

6. Procédé selon l'une des revendications précédentes, selon lequel on génère au moins un fichier de configurations (5) dépendant de l'implémentation en fonction du résultat d'un contrôle de plausibilité.

7. Procédé selon les revendications 5 et 6,
**caractérisé en ce qu'**
on utilise au moins une caractéristique de circuit pour effectuer un contrôle de plausibilité.

8. Procédé selon l'une des revendications précédentes,
**caractérisé en ce qu'**
on établit automatiquement une documentation, et la documentation décrit les informations enregistrées dans au moins un fichier de configurations indépendant de l'implémentation et/ou au moins un fichier de configurations dépendant de l'implémentation.

9. Procédé selon l'une des revendications précédentes,
**caractérisé en ce qu'**
au moins un fichier de configurations (1) indépendant de l'implémentation est établi selon format de type XML.

10. Procédé selon l'une des revendications précédentes,
**caractérisé en ce qu'**
en fonction des données de configurations abstraites, on détermine automatiquement si une unité fonctionnelle (8) saisie par le programme information est nécessaire au programme informatique, et on effectue une configuration de cette unité fonctionnelle (8) seulement si l'unité fonctionnelle (8) est nécessaire au programme informatique.

11. Procédé selon l'une des revendications précédentes,
**caractérisé en ce que**
la modification des données de configurations abstraites en un fichier de configurations (1) indépendant de l'implémentation produit une variation d'un ensemble de données de configurations pratiques.

12. Système de programme pour la configuration d'un programme informatique comprenant au moins une unité fonctionnelle (8), le système de programme ayant :
- au moins un fichier de configurations (1) indépendant de l'implémentation,
- des moyens pour générer automatiquement un fichier de configurations (5) dépendant de l'implémentation, et
- des moyens pour configurer automatiquement au moins une unité fonctionnelle (8) en fonction des informations enregistrées dans le fichier de configurations (5) dépendant de l'implémentation,
**caractérisé en ce qu'**
- on enregistre des données de configurations abstraites dans le fichier de configurations (1), indépendant de l'implémentation, ces données décrivant de manière abstraite les paramètres concrets de configurations,
- le système de programme comporte des moyens pour extraire des informations abstraites enregistrées dans au moins un fichier de configurations (1) indépendant de l'implémentation,
- le système de programme comporte des moyens pour enregistrer des informations extraites dans un conteneur de données de configurations (3),
- le système de programme comporte des moyens pour modifier et/ou extraire des données de configurations du conteneur de données de configurations (3),
- le système de programme comprend des moyens pour générer automatiquement au moins une information de dépendance, cette information de dépendance décrivant la dépendance entre au moins un composant de programme et au moins une donnée de configuration existant dans le conteneur de données de configurations (3), et
- le système de programme comporte des moyens pour générer automatiquement au moins un fichier de configurations dépendant de l'implémentation, en fonction des données de configurations abstraites enregistrées dans le conteneur de données de configurations (3), correspondant à au moins une propriété d'un circuit et à au moins une information de dépendance.

13. Système de programme selon la revendication 12,
**caractérisé en ce que**
le système de programme comporte des moyens pour exécuter un procédé selon l'une des revendications 2 à 11.

14. Système de programme selon la revendication 12 ou 13,
**caractérisé en ce que**
le système de programme est enregistré sur un support de mémoire.

15. Système de programme selon la revendication 14,
**caractérisé en ce qu'**
il est enregistré sur une mémoire à accès aléatoire (RAM), sur une mémoire morte (ROM), sur une mémoire flash, sur un disque numérique réinscriptible (DVD), sur un disque compact (CD) ou sur un disque dur.

16. Calculateur notamment appareil de commande comportant un microprocesseur,
**caractérisé en ce qu'**
il est programmé pour exécuter un procédé selon l'une des revendications 1 à 11.
